**Europäisches Patentamt**

**European Patent Office**

**Office européen des brevets**

(19)

(11) Veröffentlichungsnummer: **0 240 758 B1**

(12) # EUROPÄISCHE PATENTSCHRIFT

(45) Veröffentlichungstag der Patentschrift: **04.12.91**

(51) Int. Cl.⁵: **B62D 31/02**

(21) Anmeldenummer: **87103462.5**

(22) Anmeldetag: **10.03.87**

(54) **Dachausbildung von Nutzfahrzeugen.**

(30) Priorität: **13.03.86 DE 3608306**

(43) Veröffentlichungstag der Anmeldung:
**14.10.87 Patentblatt 87/42**

(45) Bekanntmachung des Hinweises auf die
Patenterteilung:
**04.12.91 Patentblatt 91/49**

(84) Benannte Vertragsstaaten:
**BE DE FR GB IT NL SE**

(56) Entgegenhaltungen:
**CH-A- 283 298**
**DE-C- 640 513**
**FR-A- 1 475 508**
**FR-A- 2 373 433**
**US-A- 4 221 426**

(73) Patentinhaber: **Iveco Magirus Aktiengesellschaft**
**Schillerstrasse 2 Postfach 27 40**
**W-7900 Ulm/Donau(DE)**

(72) Erfinder: **Junginger, Georg**
**Ahornweg 10**
**W-7902 Blaubeuren/Asch(DE)**
Erfinder: **Wampula, Rudolf**
**Eythstrasse 11**
**W-7902 Blaubeuren(DE)**

(74) Vertreter: **Boggio, Luigi et al**
**STUDIO TORTA Società Semplice Via Viotti,
9**
**I-10121 Torino(IT)**

## Beschreibung

Die Erfindung betrifft ein Dach für Nutzfahrzeuge, insbesondere Busse, mit mehreren gleichen, vorgefertigten Dachbeplankungselementen, die sich, hintereinander angeordnet, in Querrichtung im wesentlichen über die ganze Breite des Daches erstrecken und mit den Längsträgern sowie, in Querrichtung, mit den Querträgern des Dachrahmens verklebt sind.

Bekannte Nutzfahrzeugdächer bestehen aus einem geschweißten Rahmen mit Längsträgern, zwischen den Längsträgern angeordneten Querträgern und zwischen den Querträgern eingeschweißten Längsstreben. Zwischen den Längsträgern und den Längsstreben sind Dachbeplankunselemente angebracht, die sich in Längstrichtung des Daches zwischen den Querträgern erstrecken und mit dem Dachrahmen verschweißt sind. Die Dachbeplankungselemente bestehen gewöhnlinch aus einer Außenhaut aus Aluminium, Stahlblech oder PRFV und können auch an dem Dachrahmen angenietet sein. Zwischen der Außenhaut und einer getrennt montierten Innenhaut wird gewöhnlich eine Isolierung vorgesehen. Die ins Innere des Fahrzeugs zeigende Seite ist gewöhnlich mit Abdeckblechen versehen, an die Polstermaterial angeklebt werden kann.

Die bekannten Fertigungsverfahren sind zeitaufwendig und somit teuer. Aus Stabilitätsgründen erfordern sie sehr viel Stahl, wodurch sich das Gewicht des fertigen Daches natürlich erhöht. Die damit verbundene Schweißarbeit ist nicht nur relativ zeitaufwendig, sondern erfordert auch eine hohe Genauigkeit, damit das Dach luftdicht wird, während zum Nieten umfangreiche Bohrarbeiten an der Außenhaut und dem Rahmen erforderlich sind, worduch sich die Korrosionsgefahr erhöht.

Fr-A-2, 373, 433 betrifft eine Fahrzeugdachkonstruktion mit einem Rahmen und mehreren, in Rastermaßen gefertigten Beplankungselementen, die mit dem Rahmen verschweißt, vernietet oder verschraubt werden. Solche Beplankungen bilden jedoch nicht die ganze Dicke des Daches, so daß zusätzliche Futterstücke erfoderlich sind.

US-A-4, 221, 426 betrifft ein Fahrzeugdach aus selbsttragenden Außenhautelementen mit einer im Reaktionsspritzgußverfahren hergestellten Integralschaumstoffmasse zur Bildung einer kompakten Haut. Un eine hinreichend steife Beplankung zu erhalten, sind für diese Konstruktion jedoch Verstärkungsprofile aus Metall erforderlich die zur gegenseitigen Verbindung aneinanderstoßender Bleche mit Bohrungen versehen sind.

Aufgabe der vorliegenden Erfindung ist es, ein Nutzfahrzeugdach, insbesondere für Busse, zu schaffen, das sich durch eine einfache, stabile und leichte Konstruktion auszeichnet, für verschiedene Fahrzeugarten verwendbar und insbesondere leicht zu montieren ist.

Gelöst wird die erfindungsgemäße Aufgabe in der Weise, daß jedes Dachbeplankungselement aus einem Schaumstoffkern in der vorgesehenen Dicke des Daches, einer Außenhaut und einer Innenhaut besteht und daß im Bereich der Querträger die Fugen zwischen zwei aneinanderstoßenden Dachbeplankungselementen in der Außenhaut kompakt ausgefüllt und auf der Innenseite mit einer angeklebten oder mechanisch befestigten Abdeckung versehen werden.

Die Innenhaut wird mit einer Lage Polstermaterial abgedeckt.

In Längsrichtung des Fahrzeugs ist jedes Dachbeplankungselement mit einem Verstärkungsprofil zur Verstärkung der Dachprofile, Stützriegel usw. versehen.

Das Dachbeplankungselement enthält eine vorgeformte Aussparung, in die Bauteile, wie z.B. die Dachluke, eingesetzt werden können.

Die erfindungsgemäßen Dachbeplankungselemente werden vorzugsweise vorgefertigt und gewährleisten eine leichte, sehr stabile Dachkonstruktion ohne Korrosionsstellen und mit guten Isolationseigenschaften, die sich für Nutzfahrzeuge unterschiedlicher Länge. Die erfindungsgemäßen Dachbeplankunselemente werden vorzugsweise in gleicher Länge und Breite gefertigt und können in Reihe hintereinander angeordnet werden, um Dächer unterschidlicher Länge zu bilden, beispielsweise für eine Bus-Baureheihe. Die erfindungsgemäßen Beplankungselemente können jedoch nicht nur für Nutzfahrzeuchdächer unterschiedlicher Länge, sondern auch zur Bildung unterschiedlicher, beispielsweise abgerundeter Profile verwendet werden, obwohl die vorliegende Erfindung in erster Linie ein gerades Dach betrifft.

Durch Einsetzen von Verstärkungsprofilen in den Schaumstoffkern der Dachbeplankungselemente besteht die Möglichkeit, Dächer mit abgerundetem Querschnitt zu schaffen, d.h. mit einem Querschnitt, welcher der Kontur der Querträger des Dachrahmens entspricht. Alle Dachbeplankungselemente werden so gefertigt, daß die Außenfläche lackiert und die Innenfläche vor der Endmontage gepolstert werden kann. Auf diese Weise kann der Zusammenbau der Innen- und Außenhaut mit der Isolierung in einem einzigen Arbeitsgang erfolgen. Vorgefertigte Dachelemente sind an sich nicht neu (siehe DE-OS 29 26 270). Die bekannten Elemente verlaufen jedoch in Längsrichtung statt quer über die ganze Breite des Daches und werden hauptsächlich für Eisenbahnwagen verwendet. Außerdem bilden die bekannten Elemente nur einen Teil der Innenhaut des Eisenbahnwagendaches und werden vom Innern des Fahrzeugs aus mit der Außenhaut oder den diese tragenden Teilen verschraubt.

Eine Ausführungsform der vorliegenden Erfindung wird nachstehen an Hand der beiliegenden Zeichnungen beschrieben.

In diesen Zeichnungen zeigt

Bild 1 eine schematische Ansicht eines Teils eines Busdaches mit zwei Dachbeplankungselementen in prespektivischer Darstellung;

Bild 2 einen schematischen Längsschnitt des Fahrzeugs längs der Linie A-B in Bild 1;

Bild 3 die Einzelheit X im Bild 1.

Mit der Kennziffer 1 wird in den beiliegenden Zeichnungen das Dach eines Nutzfahrzeugs. insbesondere eines Busses, bezeichnet, das aus mehreren gleichen Dachbeplankungselementen 2 besteht, die sich, hintereinander angeordnet, in Querrichtung im wesentlichen über die ganze Breite des Daches erstrecken und mit den Längsträgern (3) und Querträgern (4) des Dachrahmens verklebt sind. Jedes einzelne Beplankungselement 2 entspricht in der Form dem Querschnitt des Dachs und in der Länge einem Rastermaß oder einem Vielfachen davon. Der gerade Teil des Fahrzeugdachs wird in der Weise gebildet, daß man eine Anzahl Dachbeplankungselemente 2 hintereinander anordnet.

Das Dachbeplankungselement 2 besteht aus einer Außenhaut 5, einer Innenhaut 6, beispielsweise aus PRFV

oder einem ähnlichen Werkstoff, und einem inneren Schaumstoff- teil 7 in der vorgesehenen Dicke des Dachs. Die Außenhaut 5 kann eine fertiglakkierte Oberfläche aufweisen, während die Innenhaut 6 anstelle der bekannten herkömmlichen Polsterung mit einer Abdeckung 8 versehen werden kann.

Innenliegende Verstärkungsprofile 9 zur Befestigung von Regenrinnen, Stützriegeln usw. werden im Fertigungsstadium in das Dachbeplankungselement 2 eingebaut.

Wie aus Bild 1 ersichtlich, besteht der Dachrahmen aus Längsträgern 3 und Querträgern 4, die in Abständen, welche der Rasterlänge entsprechen, mit den Längsträgern 3 verschweißt sind. Um die geforderte Länge des Dachs zu erhalten, wird eine gegebene Anzahl Dachbeplankungselemente 2 hintereinander angeordnet und mit dem Dachrahmen verklebt.

Durch die in Bild 2 und 3 gezeigte Montage der Dachbeplankungselemente 2 an den Querträgern 4 und den Längsträgern 3 ergibt sich eine dynamische Verbindung der Dachbeplankungselemente mit dem Rahmen.

Wie in Bild 2 gezeigt, werden die Fugen 10 zwischen aneinanderstoßenden Beplankungselementen 2 im Bereich der Querträger 4 durch eine Füllung in der Außenhaut 5 luftdicht verschlossen. Auf der Innenseite sind die Fugen mit einer Abdeckung 11 versehen, die angeklebt oder mechanisch befestigt werden kann.

Bauteile wie z.B. die Dachluke können in vorgeformte Aussparungen eingesetzt werden. Das fertige Dach kann mit anderen Teilen des Fahrzeugaufbaus, beispielsweise der Innenhaut der Seitenwand, verbunden werden.

Alle vorstehend beschriebenen und/oder in den beiliegenden Zeichnungen dargestellten neuen Merkmale sind je für sich oder gemeinsam ein wesentlicher Teil der vorliegenden Erfindung, selbst wenn in den Patentansprüchen nicht ausdrücklich darauf Bezug genommen wird.

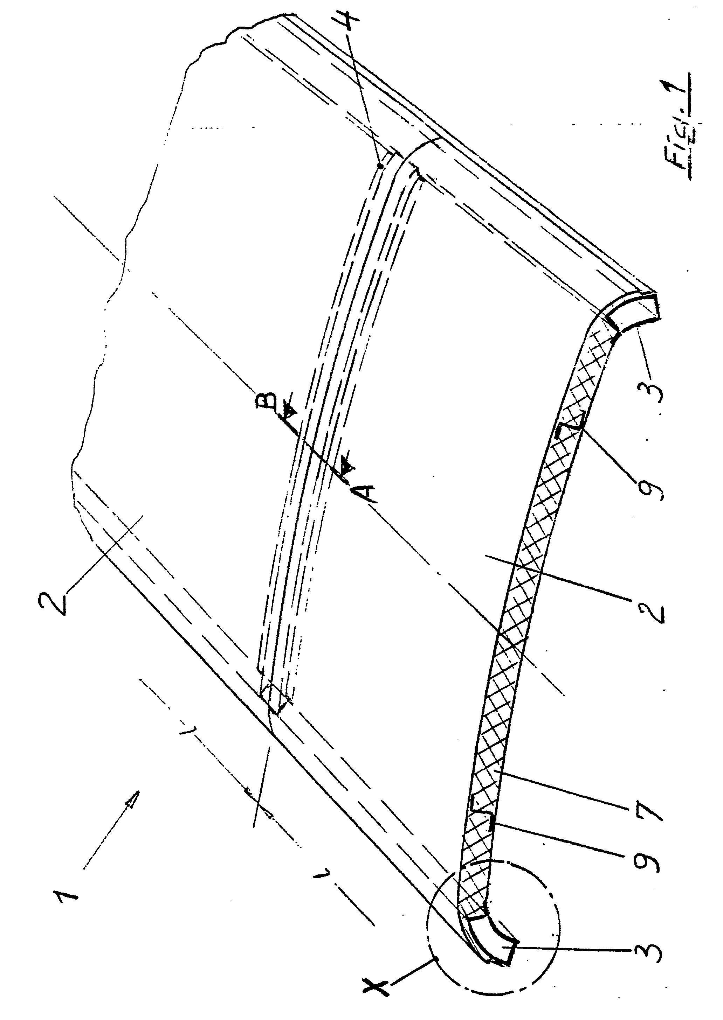

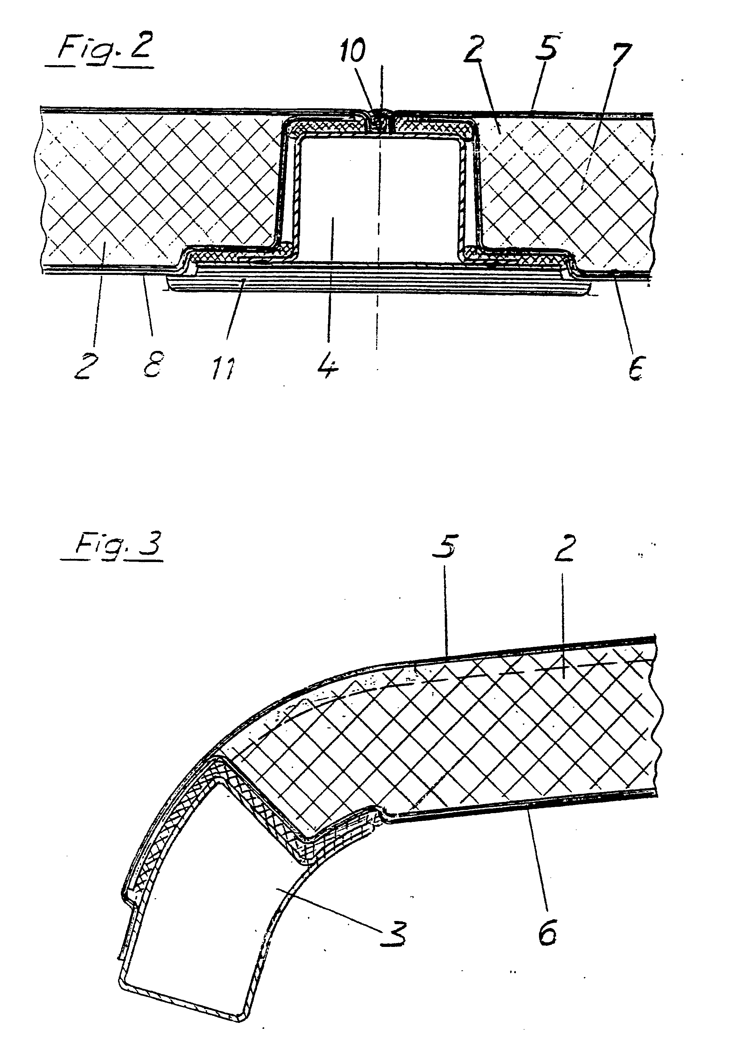

## Patentansprüche

1. Nutzfahrzeugdach (1) insbesondere für einen Bus, mit mehreren gleichen, vorgefertigten Dachbeplankungselementen (2), die sich. hintereinander angeordnet, in Querrichtung im wesentlichen über die ganze Breite des Daches erstrecken und mit den Längsträgern (3) sowie, in Querrichtung, mit den Querträgern (4) des Dachrahmens verklebt sind, dadurch gekennzeichnet, daß jedes dieser Dachbeplankungselemente (2) einen Schaumstoffkern (7) in der vorgesehenen Dicke des Daches sowie eine Außenhaut (5) und eine Innenhaut (6) aufweist und daß im Bereich der Querträger (4) die Fugen (10) zwischen aneinanderstoßenden Dachbeplankungselementen (2) in der Außenhaut (5) kompakt ausgefüllt und auf der Innenseite mit einer angeklebten oder mechanisch befestigten Abdeckung (11) versehen sind.

2. Dach nach Anspruch 1, dadurch gekennzeichnet, daß die Innenhaut (6) mit einer Lage (8) aus Polstermaterial bedeckt ist.

3. Dach nach Anspruch 1 oder 2, dadurch gekennzeichnet , daß jedes einzelne Dachbeplankungselement (2) in Längsrichtung des Fahrzeuges ein innenliegendes Verstärkungsprofil (9) zur Verstärkung von Regenrinnen, Stützriegeln usw. aufweist.

4. Dach nach einem der vorhergehenden Ansprüche 1 bis 3, dadurch gekennzeichnet, daß das Dachbeplankungselement (2) eine vorgeformte Aussparung zum Einsetzen von Bauteilen, beispielsweise der Dachluke aufweist.

## Claims

1. A roof (1) for a utility vehicle, in particular for a bus, with a plurality of like, prefabricated roof panel elements (2) which, arranged one behind the other, extend in transverse direction substantially over the entire breadth of the roof, and which are bonded to the longitudinal members (3) of a roof frame and also, in transverse direction, to the cross members (4) of the roof frame, characterised in that each of these roof panel elements (2) has a foamed material core (7) of the intended thickness of the roof, as well as an outer skin (5) and an inner skin (6), and in that in the vicinity of the cross members (4) the joints (10) between abutting roof panel elements (2) are compactly filled in the outer skin (5) and on the inside they are provided with a covering (11) fastened by adhesion or mechanically.

2. A roof according to claim 1, characterised in that the inner skin (6) is covered with a layer (8) of padding material.

3. A roof according to Claim 1 or 2, characterised in that each individual roof panel element (2) has in the longitudinal direction of the vehicle an internal reinforcing section (9) for reinforcing gutters, support beams, etc.

4. A roof according to any of the preceding Claims 1 to 3, characterised in that the roof panel element (2) has a preformed recess for the insertion of components, for example a roof hatch.

**Revendications**

1. Toit de véhicule utilitaire (1), notamment pour un bus, comprenant plusieurs éléments de coque de toit (2) préfabriqués identiques, qui sont disposés les uns derrière les autres et s'étendent en direction transversale sensiblement sur la totalité de la largeur du toit, et qui sont collés aux longerons (3), ainsi qu'en direction transversale, aux traverses (4) du cadre de toit, caractérisé en ce que chacun de ces éléments de coque de toit (2) comprend une âme en mousse (7) de l'épaisseur prévue pour le toit, ainsi qu'un revêtement extérieur (5) et un revêtement intérieur (6), et en ce que dans la zone des traverses (4), les joints (10) entre des éléments de coque de toit (2) jointifs sont comblés de manière compacte et sont munis, sur le côté intérieur, d'un couvre-joint (11) collé ou fixé mécaniquement.

2. Toit selon la revendication 1, caractérisé en ce que le revêtement intérieur (6) est recouvert d'une couche (8) de matériau de rembourrage.

3. Toit selon la revendication 1 ou 2, caractérisé en ce que chaque élément individuel de coque de toit (2) comporte en direction longitudinale du véhicule, un profilé de renfort (9) interne, destiné au renforcement de gouttières, d'arceaux de support etc..

4. Toit selon l'une des revendications précédentes 1 à 3, caractérisé en ce que l'élément de coque de toit (2) possède un évidement préfaçonné destiné à l'insertion d'éléments constitutifs, tels que par exemple un toit ouvrant.

EP 0 240 758 B1

Fig. 1

_Fig. 2_

_Fig. 3_